# EUROPEAN PATENT APPLICATION

(11) **EP 1 544 228 A2**
(43) Date of publication of application: **22.06.2005**
(21) Application number: 04025431.0
(22) Date of filing: 26.10.2004
(51) Int. Cl.: C08G 18/48, C08G 18/63, C08J 9/00

(54) **Molded polyurethane foam with property enhancements for improved comfort and greater durability**

(30) Priority: 07.11.2003 US 703251
(71) Applicant: Bayer MaterialScience LLC, Pittsburgh PA 15205 (US)
(72) Inventor: Kaushiva, Bryan D., Hurricane WV 25526 (US); Neal, Brian L., 51381 Leverkusen (DE)
(74) Representative: Perchenek, Nils, Dr.

(57) **Abstract**

The present invention provides molded flexible polyurethane foams that exhibit high vibrational dampening, low resiliency and high durability. The inventive foams are produced with polyol components that are largely double metal cyanide (DMC) based. The inventive foams may be produced using any of the production processes employed in the high volume manufacture of polyurethane seating foam and are suitable for seating applications wherein attenuation of vibrational transmissions is desired.

## Description

### FIELD OF THE INVENTION

The present invention relates in general, to polyurethane foams, and more specifically to molded flexible polyurethane foams that exhibit high vibrational dampening, low resiliency and high durability. The inventive foams are produced from polyol components that are largely double metal cyanide (DMC) based.

### BACKGROUND OF THE INVENTION

The production of flexible polyurethane foams is a common commercial process and a broad array of consumer goods is derived from it. The specifics of a manufacturing line are partially determined by the complexity of the product design. The cushioning pad of an automobile seating assembly, for example, is sufficiently complex to require an in-mold production process for economical production. Some heat is required to achieve adequate curing at the mold surface, however, and this has led to the development of two molding technologies.

The older molding process is referred to as "hot-cure" because of the temperature range utilized. This process generally uses relatively low molecular weight polyols (about 3,000 Daltons (Da)). Variations of polyol functionality and molecular weight are utilized to fine-tune the physical properties of the foams as desired. To achieve a quality surface, the reactive mixture is poured into a mold at approximately 40°C. The molds are quickly cycled up to about 120°C to obtain reasonable cure near the surface. Foams prepared thusly are ready for demold after 10-15 minutes. The molds are then cooled and prepared for another cycle. Because of the high energy costs and other manufacturing inefficiencies associated with this type of processing, it has become unpopular in North America.

The more popular "cold-cure" process also uses heated molds, the molds are maintained at about 65°C, but does not use any cooling cycle(s). Variations on this process exist, but demold times typically are below 5 minutes. A higher rate of cure results from the use of higher molecular weight polyols (about 5,000 Da) with higher amounts of oxyethylene end-capping. Variations in polyol functionality and molecular weight are also used in cold-cure processing to achieve the desired combination of foam processing characteristics and foam physical properties.

The performance of automotive seating has continued to evolve as knowledge of human response to vibrational stimuli has increased. Studies suggest, for example, that the human body is particularly sensitive to vibrations in the 4 to 20 Hz range. Thus, it has become of interest to provide cushioning material for seating assemblies that exhibits high vibrational dampening over this range.

Resiliency specifications have also shifted in recent years. As seating technologies are currently practiced, an unfortunate correlation generally exists between lower resonance frequency and higher resilience (described in U.S. 6,051,622 and by M.R. Kinkelaar, K.D. Cavender, and G. Crocco in *POLYURETHANES EXPO* '*96* pp. 496-502). Sudden low frequency vibrations can propagate strongly through high resiliency foam such that it becomes uncomfortable to the seat occupant.

Designers of cushioning materials therefore must compromise between attenuating more high frequency vibrations (with foams of low resonance and attenuation frequencies) and an acceptable level of bouncing for the occupant (with foams of high resiliency). To achieve the desired amount of high frequency vibrational attenuation, it has been common to specify relatively high resilience foam cushions (ball rebound values above about 65% as measured by ASTM D3574-95).

It should also be noted that input from product durability studies have also continually contributed to adjusting product specifications in quality automotive applications. Static durability measurements, such as hysteresis loss during compression, provide a means of characterizing future performance.

It is the combination of vibrational dampening, low resiliency, and good durability that becomes difficult to obtain within the framework of common production techniques. This is particularly true as higher load bearing foams (e.g., greater than 20 kg_{f} / 314 cm² 25% IFD) made at lower apparent densities (e.g., less than 60 kg / m³) are considered. "Indentation force deflection" (IFD) is a measure of the firmness of the polyurethane foam. Achieving good vibrational dampening properties is particularly challenging within thinner foams (e.g., less than 100 mm) at higher firmness and lower density.

Polyether polyols are typically made by a base-catalyzed ring-opening polymerization, such as that of oxypropylene adding to a suitably hydric starting compound as catalyzed by potassium hydroxide. The presence of the strongly basic compound induces a well-known isomerization of oxypropylene that yields an unsaturated mono). During the build of polyol molecular weight from the starting compound (e.g., a 300-800 Da triol) towards the final product molecular weight (e.g., 5,000 Da triol), the concentration of hydroxyl groups becomes relatively low. Under this condition, for example, at less than 56 mg KOH/g, it becomes increasingly probable that additional oxypropylene will isomerize rather than add to the polyol. This side reaction eventually becomes so dominant that it becomes impractical to attain hydroxyl values below about 28 mg KOH/g under typical processing conditions. This effective lower limit restricts access to the most preferred range of polyol equivalent weights. High monol content can also degrade the processability of such polyols in foam production and it often influences the cellular structure.

Under milder reaction conditions, the KOH catalyzed process can yield lower unsaturation contents as discussed in U.S. Pat. No. 5,010,177 or EP 0 677 543 A1. Although these methods reduce the monol content somewhat, the unsaturation levels are still high (approx. 0.02 to 0.04 meq/g) relative to DMC catalysis (less than 0.02 meq/g). The combination of higher equivalent weight with this intermediate level of unsaturation provides some benefits, but does not reach the total most preferred combination of physical properties.

Other basic compounds can be used that reduce the amount of monol produced. Cesium hydroxide catalysis, for example, has been described (e.g., U.S. Pat. No. 4,764,567). Although such production methods yield polyols approaching appropriate average equivalent weights, the foams from such polyols tend to exhibit high resiliency, which precludes such intermediates from providing the desired combination of foam physical properties. The cesium hydroxide process is also more costly and complicated because the expensive cesium hydroxide must be recycled (e.g., U.S. Pat. Nos. 5,468,840 and 5,545,712).

Polyols produced by double metal cyanide (DMC) catalysts, however, are fundamentally different. This is particularly true for polyols made by the methods described in patents such as U.S. Pat. Nos. 5,605,939, 5,689,012, 5,700,847, 5,777,177, 5,958,994, 6,008,263, 6,051,622, 6,063,309, 6,066,683, and 6,083,420. Such polyols intrinsically have very low levels of unsaturation (e.g., less than 0.01 meq/g), but also the molecular weight distribution of the polyol batch is different. This is described in detail in U.S. Pat. Nos. 6,008,263 and 6,066,683. Although the overall molecular weight distribution resulting from DMC catalysis is narrower than that of a conventional KOH product, the DMC product contains a high molecular weight tail that impacts both foam processing and properties.

A method to control the effect on foam instability of the high molecular weight tail is partly the subject matter of the invention described in U.S. Pat. No. 6,008,263. Where a polyol containing such high molecular weight species is utilized for foam manufacture, the tail contributes towards the desired vibration dampening. Many ultimate foam properties were demonstrated by the manufacture of foams via a prepolymer method using DMC polyols in U.S. Pat. Nos. 5,700,847 and 6,051,622. This technique is not widely practiced, however, and it would be desirable to achieve these ultimate properties without the need for prepolymerization.

It is common industrial practice to manufacture a range of foam grades on a single conveyor line, where grades are characterized by density and hardness. Covering a broad range of foam grades requires that any polyurethane component such as a polyol provide robust processing over an equally broad formulation spectrum. Process variability also requires a broad processing window for any polyurethane. With the lower hydroxyl polyols used in molded foams (less than 45 mg KOH/g), it has been generally found that higher levels of primary hydroxyl groups (more than 70%) are necessary to provide the desired processing latitude. Unfortunately, it has also been found that obtaining high levels of primary hydroxyl content by adding an oxyethylene endblock or cap is not feasible using DMC catalysis in this hydroxyl number range.

Therefore, a need exists in the art for flexible foams and processes of making them that achieve the desired combination of good vibration dampening, low resilience, and good durability.

### SUMMARY OF THE INVENTION

The foams of the present invention are molded flexible polyurethane foams that exhibit high vibrational dampening, low resiliency and high durability. Using polyol components that are largely double metal cyanide (DMC) based, the inventive foams may be produced by any of the production processes employed in the high volume manufacture of polyurethane seating foam. The foams of the present invention are suitable for seating applications wherein attenuation of vibrational transmissions is desired.

These and other advantages and benefits of the present invention will be apparent from the Detailed Description of the Invention herein below.

### BRIEF DESCRIPTION OF THE FIGURES

The present invention will now be described for purposes of illustration and not limitation in conjunction with the figures, wherein:
Figure 1 shows the correlation of attenuation frequency and transmitted energy in different foams at a thickness of 65 mm;
Figure 2 illustrates improved vibrational dampening properties of the foam of the present invention;
Figure 3 depicts the alteration of vibrational dampening properties during fatigue of typical foams;
Figure 4 shows the constant peak transmissivity in the inventive foam during fatigue; and
Figure 5 illustrates a comparison of foam response to dynamic fatigue test.

### DETAILED DESCRIPTION OF THE INVENTION

The present invention will now be described for purposes of illustration and not limitation. Except in the operating examples, or where otherwise indicated, all numbers expressing quantities, percentages, OH numbers, functionalities and so forth in the specification are to be understood as being modified in all instances by the term "about." Molecular weights and equivalent weights expressed herein in Daltons (Da) are number average molecular and equivalent weights unless indicated otherwise. All percent compositions are percent by weight unless indicated to the contrary.

The polyurethane foam of the present invention is produced by the reaction of an isocyanate and a polyol component which is at least 40 wt.% double metal cyanide (DMC) catalyst based and has a primary hydroxyl content of at least 65% and which is substantially made from one or more oxypropylene/oxyethylene copolymers having an unsaturation of less than 0.020 meq/g, optionally one or more components chosen from catalysts, additives, surfactants, fillers, cross-linkers and blowing agents. The inventive polyurethane foam has an attenuation frequency of less than 6 Hz, and a transmissivity at resonance of less than 4.0 A/A₀.

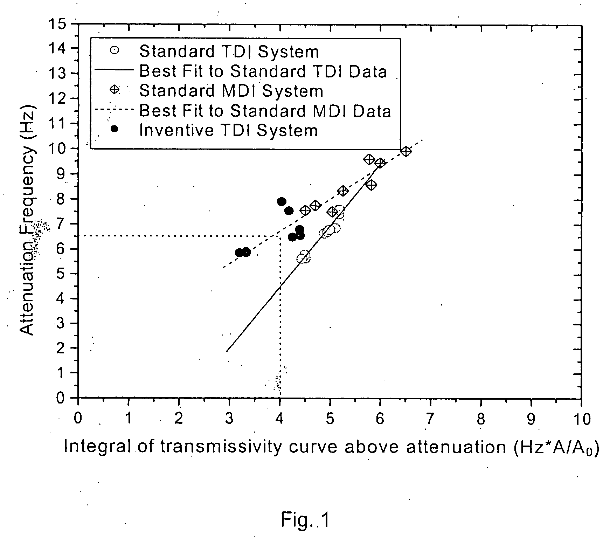

The present invention surprisingly combines the advantages of the lower resonance frequency with a lower peak transmissivity, thus dampening more of the input energy. A characterization of the overall energy amplified to the occupant is the integral of the curve with any area below attenuation (i.e., A/A₀=1 ) subtracted out. This provides an analogue to the energy amplified through the cushion to the occupant. When this is examined together with the attenuation frequency, it is surprisingly observed that the inventive foams provide access to a new region of performance - combining a broader range of attenuated frequencies with less overall amplified energy contained within the dashed region of Figure 1. Figure 1 depicts this behavior for a range of 65 mm foams made between 45 and 60 kg/m³ density and 20-27 kg_{f}/314 cm² 25% IFD. "Indentation force deflection" (IFD), as used herein, is a measure of the firmness of the polyurethane foam. IFD was measured herein by Method 6.3 of Japanese Industrial Standard (JIS) K 6400. The IFD of the polyurethane foams of the present invention was measured at 25 % deflection. For each grade of foam in Figure 1 (i.e., density, firmness, thickness), the inventive foam provides the lowest combination of transmitted energy and attenuation frequency. The data in Figure 1 were derived by integrating the transmissivity response of all the foams from the examples and comparative examples.

To attain reasonable dampening of higher frequency vibrations, it is desirable that the ratio of peak transmitted acceleration to peak input acceleration (A/A₀) exhibits attenuation (A/A₀<1 ) for frequencies above 6 Hz. In addition, it is particularly desirable to realize a peak transmissivity at the resonance frequency (also referred to as the resonance ratio) of less than 4.0 A/A₀. The inventors have found that higher equivalent weight polyols are particularly important to achieving the desired combination of properties in the resultant foam. Production of suitably high equivalent weight polyols is not possible according to conventional polyol manufacturing techniques.

Recent developments provide a means of breaking the previously observed correlation such that lower resonance frequencies are obtained at lower resiliency. By "low resiliency" is meant a ball rebound less than about 65% as measured by ASTM D3574-95. This provides the advantageous combination of attenuation over a broader vibrational spectrum and less jarring to the seat occupant.

Foams of the present invention, having a thickness of 100 mm, exhibit attenuation frequencies less than 6 Hz and a resonance ratio of less than 4.0 A/A₀. Ball rebound is lower than 65% and preferably 63% or less. In addition, the hysteresis loss is less than 22%. More particularly, the transmitted energy of the foam is preferably less than 3.8 Hz*A/A₀ with the foam exhibiting an attenuation frequency of less than 5.2 Hz. Attenuation frequency, peak transmissivity (or resonance ratio) are measured by the test method disclosed in U.S. Pat. No. 6,051,622, the entire contents of which is incorporated herein by reference thereto, using a 22.7 kg test mass. By "high vibrational dampening" is meant an attenuation frequency less than about 6 Hz and a peak transmissivity (or resonance ratio) of less than 4.0 A/A₀ as measured by the test method disclosed in U.S. Pat. No. 6,051,622. The method of the '622 patent is characterized by its maintenance of constant peak input acceleration during a sweep of vibrational frequencies from about 1 to about 10 Hz while using a test mass of 22.7 kg.

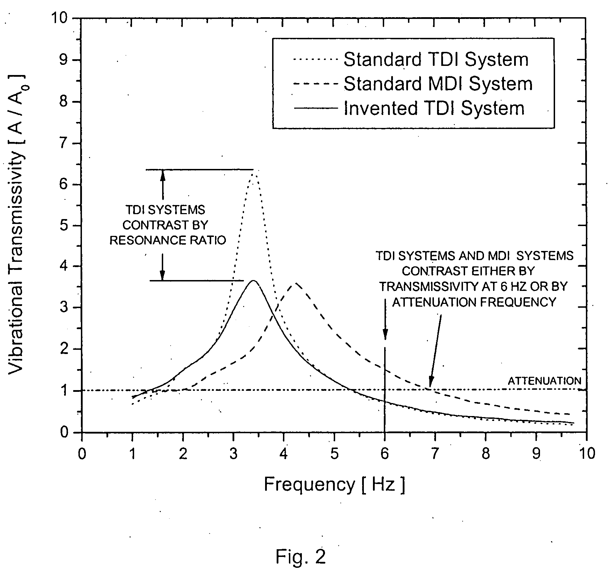

Due to the shape of a typical transmissivity response, a low resonance frequency usually indicates a low attenuation frequency. Using a Tekken mass (50 kg), Figure 2 compares the performance of the foam of the present invention, Example 5 (solid line), with that of commonly available foams made to 25 kg_{f}/314 cm² 25 % IFD using a 60 kg/m³ density at 65 mm thickness. The "Standard TDI" curve, Comparative Example C6 (dotted line), exhibits a typically narrow peak at low resonance frequency but with relatively high peak transmissivity. The "Standard MDI" curve, Comparative Example C7 (dashed line), exhibits a broader peak and a higher resonance frequency, but it does provide a lower peak transmissivity. The inventive TDI foam and the standard TDI foam can be distinguished by their respective resonance ratios. The TDI and MDI foams can be distinguished by their transmissivity at 6 Hz or by attenuation frequencies.

Characterization of creep during dynamic flexure provides an additional means of characterizing seating foam quality. "Good durability" thus also is meant to include quality performance in a dynamic durability test that incorporates not only creep but also relatively little change in transmissivity performance. Good durability partly means a hysteresis loss of less than about 22% as tested by the following method:

Using a deflector foot of eight inch diameter and a deflection rate of two inches per minute, foams were deflected to 75% of their original height. These deflection cycles were repeated three times with a one minute rest period between each cycle. Using the load-deflection data from the third cycle, the area between the loading and unloading curve was calculated as a percentage of the loading curve. This provided an estimate of the hysteresis loss.

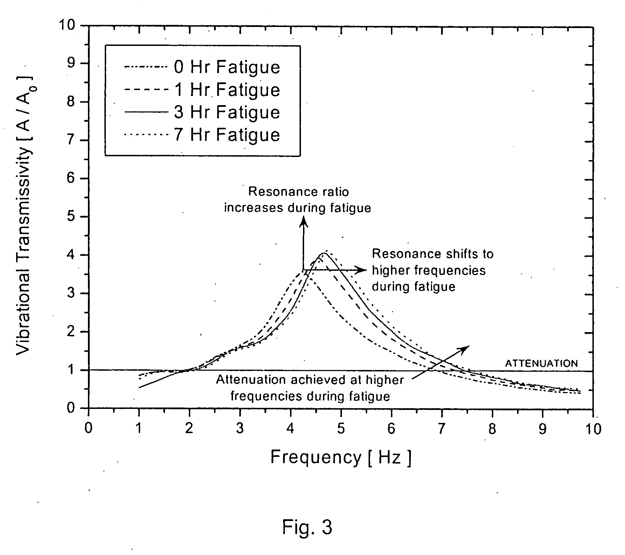

Figure 3 illustrates shifts observed during fatigue of a polyurethane cushioning foam from Comparative Example C7. As shown, fatigue of foams induces degradation of vibrational dampening properties as characterized by shifts to higher peak transmissivities and higher attenuation frequencies. The data depicted in Figure 3 was generated by an electro-hydrodraulic test machine performing cyclic deformation at 5 Hz controlled to load points (which allows for creep) with intermittent measurements of vibrational transmissivity using a Tekken mass (50 kg). This method is summarized below in Table I.

**Table I**

| *Fatigue-Transmissivity Test* | |
|---|---|
| **Step** | **Time [min]** |
| Vibrational Transmissivity 1 | 2 |
| Initial IFD with Preflexes | 10 |
| Post-IFD Recovery | 30 |
| Deflection-Load Cycle 1 | 1 |
| Fatigue Phase 1 | 60 |
| Vibrational Transmissivity 2 | 2 |
| Fatigue Phase 2 | 120 |
| Vibrational Transmissivity 3 | 2 |
| Fatigue Phase 3 | 240 |
| Vibrational Transmissivity 4 | 2 |
| Deflection-Load Cycle 2 | 1 |
| Post-Fatigue IFD | |
| Fatigue Recovery | 30 |
| Post-Recovery IFD | 3 |
| Deflection-Load Cycle 3 | 1 |

It should be noted that the IFD measurements taken before and after the fatigue cycles follow the ASTM Test B₁ method. Following the initial IFD measurement and a 30 minute recovery, a deflection-load curve was collected as the foam was compressed through 75%. Following that cycle, the initial heights were determined that provided the two desired load points which were selected at ±10% of 35 kg. Once the fatigue cycles began, the hydraulic controller continually adjusted the deflection limits to maintain the load control points. The deflections thus followed the creep of the foam during the dynamic loading of the foam.

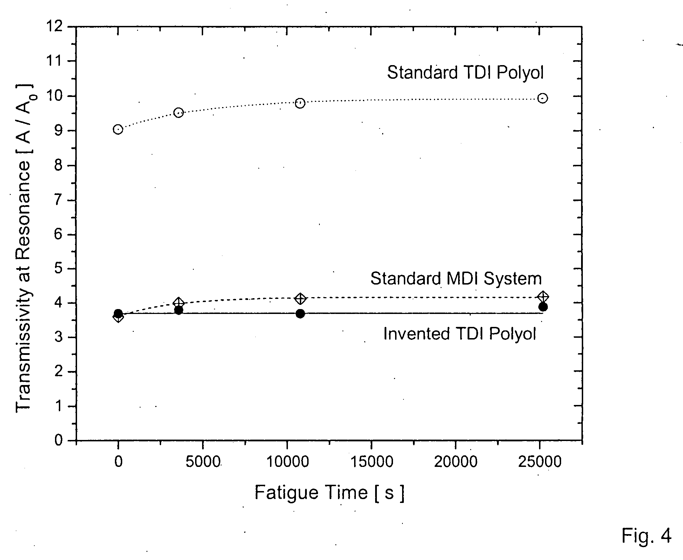

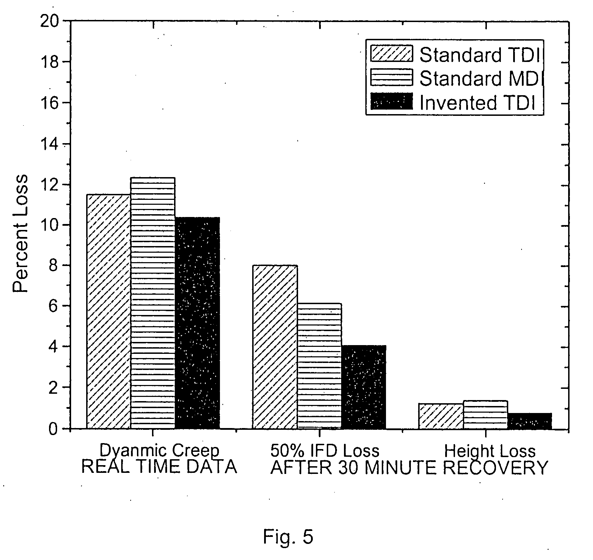

As shown in Figure 4, the inventive foam from Example 5, (lowermost, solid line) maintained a constant peak transmissivity across during this fatigue regimen whereas the other two foams from Comparative Example C6 (standard TDI - uppermost, dotted line) and Comparative Example C7 (standard MDI - dashed line) exhibited the normal trend of increasing peak vibrational transmission. Moreover, this benefit was provided in a foam that had superior resistance to creep during fatigue as illustrated by Figure 5.

The flexible polyurethane foams of the present invention are produced by reacting the polyol component described below with polyurethane foam components including, but not limited to, isocyanates, other polyols in minor usage, chain extenders and/or cross-linkers, surfactants, catalysts, and other additives.

### Polyol component

The polyol component of the present invention is a blend preferably containing one or more polyoxyalkylene polyols made by any of the various well-known synthetic methods, such as production utilizing common basic catalysis. The polyol component may additionally include polymer polyol or polymer-modified polyol such as dispersions of vinyl polymers or non-vinyl solids within a polyol matrix. Where such "filled" polyols are utilized, the polyol carrier weight exclusive of the filler is calculated as part of the total polyol weight. It is important, however, that the major fraction of the polyol component of the present invention be made up of polyols based on a double metal cyanide (DMC) catalyst either wholly or in part. Such DMC catalyzed polyols may be made by the processes described in U.S. Pat. Nos. 5,605,939, 5,689,012, 5,700,847, 5,777,177, 5,958,994, 6,008,263, 6,051,622, 6,063,309, 6,066,683, and 6,083,420, the entire contents of which are incorporated herein by reference thereto. Where the filled polyol carrier weight is counted with all other polyols in the polyol component, at least 40 wt.% of the polyol, more preferably at least 50 wt.% and most preferably at least 65 wt.% of the polyol should be DMC catalyst based.

To combine the advantages of DMC catalyzed polyols with higher reactivity, a two-catalyst synthesis approach is utilized as detailed, for example, in U.S. Pat. No. 6,066,683. In the first step of this approach, an appropriate DMC catalyst is used to synthesize the interior block or blocks of the polyols (also referred to as the polyol intermediate or the backbone). Following the backbone synthesis, an appropriate basic catalyst such as potassium hydroxide is utilized advantageously to add an endblock of oxyethylene such that the desired level of primary hydroxyl content is obtained. The resulting product is then refined appropriately to treat the residual base and prepare the now more highly reactive polyol for use in foaming.

The polyols of the polyol component of the present invention may be made using different processing methodologies and may contain different combinations and different amounts of various monomers. More particularly, the polyols may be produced via semi-batch using a low molecular weight (e.g., 300-700 Da) refined KOH starter or DMC-based starter, semi-batch using a low molecular weight starter coupled with the continuous addition of a starter alcohol as described in U.S. Pat. No. 5,777,177, or in a full continuous mode of operation, e.g., U.S. 5,689,012. It is preferred that the resulting blend of polyols exhibit a primary hydroxyl content of at least 65%, more preferably greater than 70%, and most preferably greater than 80%. For this reason, it is preferred that the DMC catalyst based portion of the polyols in the present invention be produced using the two-catalyst approach described in U.S. Pat. No. 6,066,683. The polyol component, by weight, preferably contains one or more polyoxyalkylene polyols having equivalent weights in excess of 1,000 Da, more preferably in the range of 1,500 Da to 7,000 Da and most preferably in the range of 1,500 Da to 3,000 Da.

The DMC catalyst based portion of the polyol component, whether it is used neat or as a carrier for a reinforcing filler component, is a key to the foams of the present invention. It is possible to use a minor fraction of polyol that contains low primary content, but the average primary hydroxyl content of the DMC catalyst based portion should preferably remain above 65% as described above. The majority of this portion of the polyol may preferably be manufactured using a two-step approach wherein a DMC catalysis is initially used to manufacture the backbone or intermediate and a high oxyethylene content end block is subsequently added utilizing basic catalysis such as that provided by KOH. It is preferred that high oxyethylene containing blocks, on average, make up not more than 50% by weight of the total DMC catalyst based polyols, more preferably not be more than 30% and most preferably less than 15%. By high oxyethylene content is meant any block produced using an oxyethylene feed greater than 85 percent by weight of the total oxyalkylene being fed. Where such blocks are added as endblocks, the resulting product is referred to as "capped".

The preferred backbones are random and block copolymers of oxypropylene and oxyethylene. It is preferable to use the double metal cyanide (DMC) complex catalysts described in U.S. Pat. Nos. 5,158,922 and 5,470,813, the entire contents of both patents are herein incorporated by reference thereto. The internal structure of the polyol may contain one or more blocks of either monomer as taught by U.S. Pat. Nos. 6,008,263 and 6,066,683, but most preferably contain a random distribution of oxyethylene and oxypropylene such that oxyethylene makes up not more than 25% of the total internal molecular structure. Additionally, as taught by U.S. Pat. No. 6,008,263, a mixed feed of oxypropylene and at least one other oxyalkylene may preferably be utilized for at least 95% of the total DMC catalysis period. During this mixed feed, 1.5 wt.% or greater of the total oxyalkylene feed must be oxyethylene, another stabilization-modifying comonomers, or a combination thereof as taught by U.S. Pat. No. 6,008,263. A pure oxypropylene feed must not be more than 5% of the total oxyalkylation period during the DMC catalysis period. The influence of mono) upon foam processing has been described elsewhere and it is key to the foams of the present invention that the described backbone contain less than 0.020 meq/g of unsaturation, but more preferably less than 0.010 meq/g unsaturation, and most preferably 0.008 meq/g or less. It is additionally preferred that the hydroxyl content of the backbone be less than 45 mg KOH/g, more preferably less than 35 mg KOH/g and most preferably less than 28 mg KOH/g.

Following the second stage addition of a high oxyethylene endblock to one or more of the DMC catalyst based polyols, the DMC catalyst based polyols can be characterized as a blend. Considered separately from the total polyol component, this blend should meet the requirements for unsaturation content and primary hydroxyl group content. It is additionally preferred that this final blend of one or more DMC catalyst based polyols have a hydroxyl content of less than 38 mg KOH/g, more preferably less than 32 mg KOH/g and most preferably less than 26 mg KOH/g. Where the final polyol component is characterized exclusive of any reinforcing filler, it preferably has a hydroxyl content of less than 40 mg KOH/g, more preferably less than 35 mg KOH/g and most preferably less than 30 mg KOH/g.

The polyols in the foams of the present invention may preferably be prepared by oxyalkylating a suitably hydric initiator molecule with oxypropylene alone, a mixture of oxypropylene and a higher oxyalkyene such as 1,2- or 2,3- oxybutylene, styrene oxide, C₅-C₁₈ α-olefin oxides, oxetane, 3-methyloxetane, caprolactone, maleic anhydride, phthalic anhydride, halogenated oxypropylene, halogenated oxybutylene, or a mixture of any of the foregoing oxyalkylenes with oxyethylene. Oxyethylene and oxypropylene are particularly preferred. The polyol component preferably is made of at least 50 percent by weight of oxypropylene. Within the DMC catalyst period, the oxypropylene preferably is added according to the constraints previously described. The composition of the oxyalkylene feed may change during the oxyalkylation to synthesize a variety of random and block/random polyol configurations. Initial oxyalkylation, for example, may be performed exclusively with oxypropylene followed by a period where a simultaneous feed of oxypropylene and oxyethylene is utilized.

It should be kept in mind that synthesizing the backbones using DMC catalysis creates some special processing options. It has been found that such catalysts have a shorter induction period where hydric starting compounds of intermediate molecular weight are used rather than employing relatively low molecular weight or "monomeric" initiators. Such intermediate molecular weight initiators are frequently made by oxyalkylating "monomeric" initiators using other catalysts, such as potassium hydroxide. However, these initiators may also be manufactured using double metal catalysis via advantageous processing techniques. The intermediate initiators can be prepared such that they are homopolymers, block copolymers, random copolymers, or block/random copolymers including, but not limited to, such monomers as oxyethylene, oxypropylene, higher oxyalkylenes such as 1,2- or 2,3-oxybutylene, styrene oxide, C₅-C₁₈ α-olefin oxides, oxetane, 3-methyloxetane, caprolactone, maleic anhydride, phthalic anhydride, halogenated oxypropylene, halogenated oxybutylene, and any mixtures thereof. Oxyethylene, oxyethylene/oxypropylene mixtures, and particularly oxypropylene alone are preferred. Where semi-batch or batchwise production means are employed, preferred initiators have equivalent weights ranging from 50 Da to 1,000 Da, more preferably from 200 Da to 500 Da. Where continuous or semi-batch continuous-addition-of-starter methodologies are practiced "monomeric" starting compounds may also be employed directly because induction time no longer becomes a limitation. This is described, for example, in U.S. Pat. Nos. 5,689,012 and 5,777,177. Polyols useful in the foams of the present invention may be made by any of these process methodologies.

Monomeric molecules which may be used as initiating compounds for oxyalkylation by a non-metal cyanide complex catalyst or by a double metal cyanide complex catalyst include, but are not limited to, ethylene glycol, diethylene glycol, triethylene glycol, propylene glycol, dipropylene glycol, tripropylene glycol, neopentyl glycol, glycerin, trimethylolpropane, trimethylolethane, pentaerythritol, α-methylglucoside, sorbitol, mannitol, hydroxymethylglucoside, hydroxypropylglucoside, sucrose, N,N,N',N'-tetrakis[2-hydroxyethyl or 2-hydroxypropyl]ethylene diamine, 1,4-cyclohexanediol, cyclohexanedimethanol, hydroquinone, resorcinol, and the like. Nominal initiator functionality is from 2 to 8 or more, preferably from 2 to 6, and more preferably from 2 to 4. Any mixtures of monomeric initiators or their oxyalkylated oligomers may also be utilized. Preferred polyols for the present invention are based on the monomeric initiators glycerin, glycerin/dipropylene glycol blends, and sorbitol/dipropylene glycol blends, whether used in the form of intermediate weight starters or used directly. The most preferred backbones are synthesized from glycerin using a mixed oxide feed containing from 1.5 to 16 wt.% oxyethylene and from 98.5 to 84 wt.% oxypropylene.

The polyol component may contain one or more polymer polyols or polymer-modified polyols both of which are often referred to as "reinforcing fillers". Polymer polyols are dispersions of vinyl polymer within a polyoxyalkylene base polyol such as dispersions of styrene/acrylonitrile (SAN) random copolymers. Polymer-modified polyols are dispersions of non-vinyl solids. These non-vinyl solids are typically isocyanate-derived solids such as PIPA and PHD polyols within a polyoxyalkylene base polyol carrier. Both polymer polyols and polymer-modified polyols are known to those skilled in the art.

It is preferred, but not necessary, that the polymer polyols and polymer-modified polyols utilized in the invention be prepared using low unsaturation polyoxyalkylene base polyols, preferably a base-catalyzed polyol that has been capped and contains a high primary hydroxyl content. The polymer polyols and polymer-modified polyols may have a solids content from 5 to 50 weight percent, preferably from 15 to 45 weight percent. The polymer polyols or polymer-modified polyols may be used in proportions that provide a solids content within the total polyol component of 0 to 35 weight percent, more preferably from 5 to 25 weight percent and most preferably from 8 to 20 weight percent. The polyoxyalkylene portion of the total polyol component, apart from the filler weight, should meet all of the previously described requirements.

### Chain extenders/cross-linkers

Chain extenders and/or cross-linkers may be utilized as is known to those skilled in the art. Chain extenders include hydroxyl and amine functional molecules with nominal functionalities of two, where a primary amine group is considered to be monofunctional, and having a molecular weight of less than 500 Da. Some non-limiting examples of chain extenders include ethylene glycol, diethylene glycol, propylene glycol, dipropylene glycol, tripropylene glycol, monoethanolamine, toluene diamine, and the various electronically and sterically hindered aromatic amines such as ar-alkylated toluene diamines and methylenedianilines and substituted aromatic amines such as 4,4'-methylenebis-(orthochloroaniline) or "MOCA". Preferred chain extenders include aliphatic glycols and mono- or di- alkanolamines.

Preferred cross-linkers contain a nominal functionality greater than three and have molecular weights less than 500 Da. Non-limiting examples of cross-linkers include glycerin, triethanolamine, and diethanolamine. Diethanolamine or "DEOA" is preferred. Chain extenders and cross-linkers are used in the invention in conventional amounts, e.g., less than 5 parts based on 100 parts of the polyol component.

### Surfactants

One or more foam stabilizing surfactants may be included and suitable surfactants are well-known to those skilled in the art. Suitable surfactants include the various organopolysiloxanes and polyoxyalkylene organopolysiloxanes as are well known to those skilled in the art available from companies such as Air Products, Goldschmidt A.G., and GE Silicones OSI Specialties. The amount of surfactant should be an amount effective to avoid foam collapse, and is readily ascertained by one skilled in the art. Amounts of from 0.1 to 5 weight percent, more preferably 0.5 to 2 weight percent based on the weight of the foam may be suitable.

### Blowing agents

One or more blowing agents may be necessary to form the foams of the present invention and may be of the physical or reactive type. Non-limiting examples of physical blowing agents include lower alkanes, hydrofluorocarbons, perfluorocarbons, chlorofluorocarbons and the like. Environmental concerns may discourage or prohibit consideration of many otherwise potentially useful physical blowing agents, such as the chlorofluorocarbons. Preferred blowing agents include liquid carbon dioxide as a physical blowing agent and/or water as a non-limiting example of a reactive blowing agent. The carbon dioxide may be added to the reaction mixture in the foam mix head in liquid form. Mixtures of reactive or physical blowing agents may be utilized, for example water and one or more lower alkanes or water and carbon dioxide. Water is a particularly preferred blowing agent, in amounts from 1 to 5.5 parts by weight relative to 100 parts of the polyol component, more preferably from 1.7 to 4.3 parts and most preferably from 2 to 3.5 parts.

### Catalyst

One or more catalysts are preferred. Metal catalysts, such as tin compounds, may be utilized in combination with amine-type catalysts, but it has been found that foams of the present invention may be prepared in the absence of such metal catalysts while still obtaining demold times of five minutes or less. Suitable metal catalysts are known to those skilled in the art. Preferred metal catalysts include stannous octoate, dibutyltin dilaurate, and dibutyltin diacetate. The inventors herein prefer, however, to use one or more amine-type catalysts. Suitable amine-type catalysts are known to those skilled in the art and non-limiting examples include bis(2-dimethylaminoethyl)ether and triethylene diamine.

### Isocyanate component

The isocyanate component may be made up of one or more di- or poly-isocyanates or modified isocyanates. Examples of suitable diisocyanates include 2,4- and 2,6-toluene diisocyanates and mixtures of these isomers (TDI). Also suitable are 2,2'-, 2,4'-, and 4,4'-methylenediphenylene diisocyanates with mixtures containing the 4,4'- isomer in major part (MDI) particularly preferred. An example of a suitable polyisocyanate is polymethylene polyphenylene polyisocyanates, prepared by the phosgenation of mixtures predominately two to five ring condensation products of formaldehyde and aniline. Mixtures of such isocyanates are suitable and known to those skilled in the art.

Modified isocyanates, known to those skilled in the art, include urea-, urethane-, carbodiimide-, allophanate-, uretonimine-, isocyanurate-, uretdione-, and other modified isocyanates. Such isocyanates are prepared by reaction of a stoichiometric excess of isocyanate with an isocyanate reactive compound. To form urethane-modified isocyanates, for example, a monomeric or oligomeric glycol may be utilized. Urea-modified isocyanates may be formed by use of compounds such as water or a diamine. Other modifications may be made by the reaction of isocyanates pure or in mixtures with themselves via dimerization or trimerization. Urethane- and carbodiimide- modified isocyanates are preferred. Other modifications may include prepolymerizing a minor fraction of isocyanate groups with an appropriate polyether or polyester polyol.

The isocyanate component most preferably contains TDI, MDI, or a mixture of TDI and MDI, where the MDI can include purely monomeric or polymeric forms. As known to those skilled in the art, the isocyanate index is calculated by multiplying 100 by the ratio of isocyanate groups to all active hydrogen groups contained in the polyol component, the water, the cross-linkers, etc. A 100 index thus represents a stoichiometric ratio. The isocyanate component is supplied in an amount effective to provide an isocyanate index from 70 to 120. For TDI, this index is preferably from 90 to 110, and more preferably from 95 to 105. For MDI, this index is preferably from 80 to 110 and more preferably from 80 to 90.

### EXAMPLES

The present invention is further illustrated, but is not to be limited, by the following examples. In the examples below, the following materials were used:
- Polyol A: a base-catalyzed polyoxypropylene triol having a hydroxyl number of 31, an unsaturation of approx. 0.04 meq/g, and a 16 wt.% polyoxyethylene cap;
- Polyol B: a base-catalyzed polyoxypropylene triol, except with a 19 wt.% cap and an unsaturation of approx. 0.04 meq/g;
- Polyol C: a base-catalyzed polyol made to 36 OH, having a 20 wt.% EO cap, and an unsaturation of approx. 0.03 meq/g;
- Polyol D: a base-catalyzed polyol made to 28 OH having a 14 wt.% EO cap, and an unsaturation of approx. 0.06 meq/g;
- Polyol E: a polyol with an intrinsically low unsaturation synthesized in a two-step procedure (DMC followed by base catalysis) to 25 OH, having a 12 wt.% EO cap and approx. 0.01 meq/g unsaturation;
- Polyol F: also made using a two-step procedure to 28 OH and having a 15 wt.% EO cap and 0.008 meq/g unsaturation;
- Polyol G: a base-catalyzed polyol made to mimic Polyol E. (To obtain a lower degree of unsaturation at low hydroxyl number, EO was added in increasing proportions in three stages. The 700 Da starter was built to approx. 120 OH using 100 wt.% oxypropylene; then to approx. 30 OH using 13 wt.% oxyethylene and 87 wt.% oxypropylene; then to approx. 27 OH using 60 wt.% oxyethylene and 40 wt.% oxypropylene; and finally, it was capped with 6 wt.% oxyethylene.) This 24 OH polyol had 0.038 meq/g of unsaturation.

Polyols H, I and J below were synthesized to incorporate a reinforcing SAN polymer filler and were used in the foams of the examples to obtain firmness.
- Polyol H: synthesized using Polyol B feedstock with 41 wt.% SAN filler.
- Polyol I: synthesized using Polyol C feedstock with 43 wt.% SAN filler.
- Polyol J: synthesized using Polyol F feedstock with 40 wt.% SAN filler.
- DC5164: silicone surfactant available from Air Products;
- DC5169: silicone surfactant available from Air Products;
- B-6715: silicone surfactant available from Goldschmidt;
- B-8719LF: silicone surfactant available from Goldschmidt;
- Hyperlite 1646: high EO polyol from Bayer Polymers LLC;
- NIAX A-1: amine catalyst (bis(dimethyaminoethyl) ether) from GE Silicones OSI Specialties;
- NIAX A-33: amine catalyst (triethylene diamine) from GE Silicones OSI Specialties;
- MONDUR TD-80: 80/20 mixture of 2,4- and 2,6- toluene diisocyanate (TDI), available from Bayer Polymers LLC; and
- MONDUR 1523: high monomer MDI available from Bayer Polymers LLC.

### Example 1 and Comparative Examples C2, C3, and C4

The foams were made to a 100 mm thickness at 55 kg/m³ density and approx. 25 kg_{f}/314 cm² 25 % IFD. Keeping those three characteristics constant allows the comparison of the other properties below in Table II. The transmissivity data shown was collected using a 22.4 kg test mass.

**Table II**

| **Component** | **Ex. 1** | **C2** | **C3** | **C4** |
|---|---|---|---|---|
| Polyol A (pphp) | | 55 | | |
| Polyol H (pphp) | | 45 | | |
| Polyol D (pphp) | | | 100 | 82.6 |
| Polyol I (pphp) | 38.4 | | | 17.4 |
| Polyol E (pphp) | 61.6 | | | |
| Water (pphp) | 2.3 | 2.3 | 2.55 | 2.55 |
| Diethanolamine (pphp) | 1.5 | 1.5 | 0.5 | 0.5 |
| Hyperlite 1646 (pphp) | | | 1 | 1 |
| DC-5164/DC-5169 (pphp) | 0.8 | 0.8 | | |
| B-6715/B-8719LF (pphp) | | | 0.57 | 0.57 |
| NIAX A-1 (pphp) | 0.1 | 0.1 | 0.1 | 0.1 |
| NIAX A-33 (pphp) | 0.3 | 0.3 | 0.3 | 0.3 |
| MONDUR TD-80 (pphp) | 1001 | 1001 | | |
| MONDUR 1523 (pphp) | | | 109.51 | 1001 |
| | | | | |

| **Properties** | | | | |
|---|---|---|---|---|
| Foam Density (kg/m³) | 55.1 | 55.4 | 55.3 | 54.9 |
| Mold Thickness (mm) | 100 | 100 | 100 | 100 |
| 25% JIS IFD (kg/314 cm²) | 24.8 | 26.1 | 25 | 24.8 |
| 50% JIS IFD (kg/314 cm²) | 43.0 | 46.8 | 45.9 | 45.9 |
| Resiliency (ball rebound, %) | 61 | 69 | 58 | 63 |
| Hysteresis (%) | 21.4 | 20.1 | 27.7 | 29.5 |
| Resonance Frequency (Hz) | 3.36 | 3.44 | 3.66 | 4.09 |
| Transmissivity at Resonance (A/A₀) | 3.99 | 5.34 | 4.59 | 4.7 |
| Transmissivity at 6 Hz (A/A₀) | 0.69 | 0.61 | 1.08 | 1.35 |
| Attenuation Frequency (Hz) | 5.19 | 5.08 | 6.12 | 6.57 |
| Amplified Energy (Hz• A/A₀) | 3.79 | 4.06 | 4.38 | 4.26 |

As can be appreciated by reference to Table II, the hysteresis value of the foam of Example 1 was comparable to that of Comparative Example C2 (both TDI based). The two foams of Comparative Examples C3 and C4 (both MDI based) exhibited higher level of hysteresis typically seen in MDI-based foams. The resiliency follows the opposite trend where the foam of the present invention exhibited a lower ball rebound that was more similar to the MDI foams than of the TDI foam in Comparative Example C2.

The key characteristic of foams of the present invention is that the lower peak height at resonance combined with a lower attenuation frequency leads to the lower amplified energy factor (3.79), which was unattainable for the other foams. It should be noted that this lower amplified energy factor was achieved with an attenuation frequency well below 6 Hz.

### Example 5 and Comparative Examples C6, C7, and C8

Table III further illustrates the performance of the foams of the present invention and provides other comparative examples. The foams in Table III were made to a 65 mm thickness at 60 kg/m³ density and approx. 25 kg_{f}/314 cm² 25% IFD. All transmissivity data in Table III was collected with the 22.4 kg test mass.

As can be appreciated by reference to Table III, the hysteresis of the foam of Example 5 was comparable to that of Comparative Example C6 (both TDI based), but that of the MDI-based foam (Comparative Example C7) was much higher. The resiliency followed the opposite trend with the inventive foam (Example 5) exhibiting lower ball rebound similar to the MDI foam (Comparative Example C7). The combination of low amplified energy at low attenuation frequency was again observed.

Comparative Example C8 was provided to demonstrate the performance of foams based on higher unsaturation contents. This approx. 24 OH polyol provided inferior firmness in the 25% IFD, yet still exhibited comparatively higher hysteresis than Example 5. This may be due to the higher monol content. Moreover, Comparative Example C8 also exhibited a higher peak height and a higher attenuation frequency than Example 5, which leads to the higher amplified energy shown. This highlights the importance of the intrinsically low unsaturation content of the polyol in Example 5.

**Table III**

| **Component** | **Ex. 5** | **C6** | **C7** | **C8** |
|---|---|---|---|---|
| Polyol A (pphp) | | 63.4 | | |
| Polyol H (pphp) | | 36.6 | | |
| Polyol D (pphp) | | | 76.7 | |
| Polyol I (pphp) | | | 23.3 | |
| Polyol E (pphp) | 62.5 | | | |
| Polyol J (pphp) | 37.5 | | | 37.5 |
| Polyol G (pphp) | | | | 62.5 |
| Water (pphp) | 2.1 | 2.1 | 2.7 | 2.1 |
| Diethanolamine (pphp) | 0.8 | 0.8 | 0.13 | 0.8 |
| Hyperlite 1646 (pphp) | | | 1 | |
| DC-5164/DC-5169 (pphp) | 0.8 | 0.8 | | 0.8 |
| B-6715/B-8719LF (pphp) | | | 0.57 | |
| NIAX A-1 (pphp) | 0.13 | 0.13 | 0.18 | 0.13 |
| NIAX A-33 (pphp) | 0.35 | 0.35 | 0.37 | 0.35 |
| MONDUR TD-80 (pphp) | 1001 | 1001 | | 1001 |
| MONDUR 1523 (pphp) | | | 851 | |
| | | | | |

| **Properties** | | | | |
|---|---|---|---|---|
| Foam Density (kg/m³) | 59.6 | 59.9 | 59.8 | 59.6 |
| Mold Thickness (mm) | 65 | 65 | 65 | 65 |
| 25% JIS IFD (kg/314 cm²) | 25.5 | 24.6 | 24.3 | 20.2 |
| 50% JIS IFD (kg/314 cm²) | 41.2 | 41.6 | 41.4 | 33.6 |
| Resiliency (ball rebound, %) | 63 | 69 | 58 | - |
| Hysteresis (%) | 21.0 | 20.6 | 30.0 | 24.9 |
| Resonance Frequency (Hz) | 4.24 | 3.97 | 4.64 | 22.49 |
| Transmissivity at Resonance (A/A₀) | 3.21 | 5.67 | 3.83 | 4.94 |
| Transmissivity at 6 Hz (A/A₀) | 0.95 | 0.82 | 1.87 | 3.74 |
| Attenuation Frequency (Hz) | 5.86 | 5.63 | 7.50 | 5.24 |
| Amplified Energy (Hz •A/A₀) | 3.29 | 4.48 | 4.76 | 3.76 |
| % increase in Peak Transmissivity | 5.4 | 10.0 | 16.1 | - |
| 50% IFD Loss | 4.1 | 8.0 | 6.1 | - |
| % Height Loss | 0.8 | 1.2 | 1.4 | - |

In addition to the incomparable performance, the durability of the foams made by the invention can be appreciated by reviewing the results of the dynamic fatigue test described earlier. As shown in Table III, the peak transmissivity of the inventive foam of Example 5 shifted by only 5.4% over seven hours of fatigue. Comparative Example C6 was closest to that level of endurance at 10.0%. Similarly, the 50% IFD loss and the % height loss also showed the superiority of the foam of Example 5.

### Example 9 and Comparative Examples C10 and C11

Table IV further illustrates the performance of the foams of the present invention and provides other comparative examples under a very demanding density, firmness and thickness combination. The foams in Table IV were made to a 65 mm thickness at 45 kg/m³ density and approx. 20 kg_{f}/314 cm² 25% IFD. All transmissivity data in Table IV was collected with the 22.4 kg test mass.

As can be appreciated by reference to Table IV, the hysteresis of the foam of Example 9 was comparable to that of Comparative Example C10 (both TDI based), but that of the MDI-based foam (Comparative Example C11) was much higher. The ball rebound of Example 9 was more similar to Comparative Example C11 than to Comparative Example C10.

At this stressfully low density range, the attenuation frequency of all of the foams increased above 6 Hz, which was not ideal. The combination of low density and high firmness provided a clear contrast in durability performance. The foam of Example 9 exhibited superior performance in the dynamic fatigue testing of this grade of foams. As can be appreciated by reference to Table IV, the peak transmissivity increased by only 0.5% which is minimal when compared to the 21.0% of Comparative Example C10 or the 8.9% of Comparative Example C11. Example 9 also exhibited the least change in either the 50% IFD loss or the percent height loss. These factors together indicate the superior durability of the foams of the present invention with respect to the dynamic comfort of the cushion even under non-ideal applications.

**Table IV**

| **Component** | **Ex. 9** | **C10** | **C11** |
|---|---|---|---|
| Polyol A (pphp) | | 39 | |
| Polyol H (pphp) | | 61 | |
| Polyol D (pphp) | | | 76.7 |
| Polyol l (pphp) | | | 23.3 |
| Polyol E (pphp) | 37.5 | | |
| Polyol J (pphp) | 62.5 | | |
| Water (pphp) | 2.55 | 2.55 | 3.71 |
| Diethanolamine (pphp) | 1.5 | 1.5 | 0.5 |
| Hyperlite 1646 (pphp) | | | 1 |
| DC-5164/DC-5169 (pphp) | 0.8 | 0.8 | |
| B-6715/B-8719LF (pphp) | | | 0.57 |
| NIAX A-1 (pphp) | 0.13 | 0.13 | 0.18 |
| NIAX A-33 (pphp) | 0.35 | 0.35 | 0.37 |
| MONDUR TD-80 (pphp) | 1001 | 1001 | |
| MONDUR 1523 (pphp) | | | 851 |
| | | | |

| **Properties** | | | |
|---|---|---|---|
| Foam Density (kg/m³) | 45.5 | 45.1 | 45.1 |
| Mold Thickness (mm) | 65 | 65 | 65 |
| 25% JIS IFD (kg/314 cm²) | 20.8 | 20.2 | 22.6 |
| 50% JIS IFD (kg/314 cm²) | 35.7 | 36.0 | 41.4 |
| Resiliency (ball rebound, %) | 57 | 61 | 52 |
| Hysteresis (%) | 30.2 | 29.8 | 41.0 |
| Resonance Frequency (Hz) | 3.97 | 4.02 | 5.22 |
| Transmissivity at Resonance (A/A₀) | 3.60 | 4.49 | 3.49 |
| Transmissivity at 6 Hz (A/A₀) | 1.24 | 1.37 | 2.80 |
| Attenuation Frequency (Hz) | 6.48 | 6.64 | 8.58 |
| Amplified Energy (Hz• A/A₀) | 4.35 | 4.93 | 5.54 |
| % increase in Peak Transmissivity | 0.5 | 21.0 | 8.9 |
| 50% IFD Loss | 8.0 | 11.3 | 10.8 |
| % Height Loss | 1.2 | 1.3 | 1.3 |

As the examples herein demonstrate, molded flexible polyurethane foams according to the present invention exhibited high vibrational dampening and good durability and low resilience. Such foams are useful in applications where dampening is desirable. Some non-limiting examples of such applications include vehicular seating for automobiles, railroad vehicles, boats, agricultural equipment, etc.

The foregoing examples of the present invention are offered for the purpose of illustration and not limitation. It will be apparent to those skilled in the art that the embodiments described herein may be modified or revised in various ways without departing from the spirit and scope of the invention. The scope of the invention is to be measured by the appended claims.

## Claims

1. A polyurethane foam comprising the reaction product of:
an isocyanate; and
a polyol component which is at least about 40 wt.% double metal cyanide (DMC) catalyst based and has a primary hydroxyl content of at least about 65% and which substantially comprises one or more oxypropylene/oxyethylene copolymers having an unsaturation of less than about 0.020 meq/g,
optionally one or more components chosen from catalysts, additives, surfactants, fillers, cross-linkers and blowing agents,
wherein the polyurethane foam has an attenuation frequency of less than about 6 Hz, and a transmissivity at resonance of less than about 4.0 A/A₀.

2. The polyurethane foam according to Claim 1, wherein transmitted energy of the foam is less than about 3.8 Hz*A/A₀.

3. The polyurethane foam according to Claim 1, wherein the attenuation frequency of the foam is less than about 5.2 Hz.

4. The polyurethane foam according to Claim 1, wherein the one or more oxypropylene/oxyethylene copolymers has an unsaturation of less than about 0.010 meq/g.

5. The polyurethane foam according to Claim 1, wherein the one or more oxypropylene/oxyethylene copolymers has an unsaturation of less than about 0.008 meq/g.

6. The polyurethane foam according to Claim 1, wherein the polyol component is at least about 50 wt.% double metal cyanide (DMC) catalyst based, excluding filler carried by the polyols.

7. The polyurethane foam according to Claim 1, wherein at least about 65 wt.% of the polyol component is double metal cyanide (DMC) catalyst based, excluding filler carried by the polyols.

8. The polyurethane foam according to Claim 1, wherein at least about 70 wt.% of the polyol component is double metal cyanide (DMC) catalyst based, excluding filler carried by the polyols.

9. The polyurethane foam according to Claim 1, wherein the primary hydroxyl content of the polyol component is at least about 80%.

10. The polyurethane foam according to Claim 1, wherein the isocyanate component is a mixture of 2,4- and 2,6-toluene diisocyanates.

11. The polyurethane foam according to Claim 1, wherein the isocyanate component is a mixture of 2,2'-, 2,4'-, and 4,4'-methylenediphenylene diisocyanates.

12. The polyurethane foam according to Claim 1, wherein the polyol component further includes one or more polymer polyols or polymer-modified polyols.

13. The polyurethane foam according to Claim 1, wherein the polyol component further includes a dispersion of styrene/acrylonitrile (SAN) random copolymers.

14. The polyurethane foam according to Claim 1, wherein the catalyst is chosen from bis(2-dimethylaminoethyl)ether and triethylene diamine.

15. The polyurethane foam according to Claim 1, wherein the blowing agent is water.

16. The polyurethane foam according to Claim 1, wherein the cross-linker is diethanolamine.

17. In a vehicular seat cushion, the improvement comprising including the polyurethane foam according to Claim 1.

18. A process of making polyurethane foam comprising reacting at about 65°C:
an isocyanate; and
a polyol component which is at least about 40 wt.% double metal cyanide (DMC) catalyst based and has a primary hydroxyl content of at least about 65% and which substantially comprises one or more oxypropylene/oxyethylene copolymers having an unsaturation of less than about 0.020 meq/g,
optionally one or more components chosen from catalysts, additives, surfactants, fillers, cross-linkers and blowing agents,
wherein the polyurethane foam has an attenuation frequency of less than about 6 Hz, and a transmissivity at resonance of less than about 4.0 A/A₀.

19. The process according to Claim 18, wherein transmitted energy of the foam is less than about 3.8 Hz*A/A₀.

20. The process according to Claim 18, wherein the attenuation frequency of the foam is less than about 5.2 Hz.

21. The process according to Claim 18, wherein the one or more oxypropylene/oxyethylene copolymers has an unsaturation of less than about 0.010 meq/g.

22. The process according to Claim 18, wherein the one or more oxypropylene/oxyethylene copolymers has an unsaturation of less than about 0.008 meq/g.

23. The process according to Claim 18, wherein at least about 50 wt.% of the polyol component is double metal cyanide (DMC) catalyst based, excluding filler carried by the polyols.

24. The process according to Claim 18, wherein at least about 65 wt.% of the polyol component is double metal cyanide (DMC) catalyst based, excluding filler carried by the polyols.

25. The process according to Claim 18, wherein the primary hydroxyl content of the polyol component is at least about 70%.

26. The process according to Claim 18, wherein the primary hydroxyl content of the polyol component is at least about 80%.

27. The process according to Claim 18, wherein the isocyanate component is a mixture of 2,4- and 2,6-toluene diisocyanates.

28. The process according to Claim 18, wherein the isocyanate component is a mixture of 2,2'-, 2,4'-, and 4,4'-methylenediphenylene diisocyanates.

29. The process according to Claim 18, wherein the polyol component further includes one or more polymer polyols or polymer-modified polyols.

30. The process according to Claim 18, wherein the polyol component further includes a dispersion of styrene/acrylonitrile (SAN) random copolymers.

31. The process according to Claim 18, wherein the catalyst is chosen from bis(2-dimethylaminoethyl)ether and triethylene diamine.

32. The process according to Claim 18, wherein the blowing agent is water.

33. The process according to Claim 18, wherein the cross-linker is diethanolamine.

34. In a process of making a seat cushion, the improvement comprising including a polyurethane foam comprising an isocyanate and a polyol component which is at least about 40 wt.% double metal cyanide (DMC) catalyst based and has a primary hydroxyl content of at least about 65% and which substantially comprises one or more oxypropylene/oxyethylene copolymers having an unsaturation of less than about 0.020 meq/g, optionally one or more components chosen from catalysts, additives, surfactants, fillers, cross-linkers and blowing agents, wherein the polyurethane foam has an attenuation frequency of less than about 6 Hz, and a transmissivity at resonance of less than about 4.0 A/A₀.

35. The process according to Claim 34, wherein transmitted energy of the foam is less than about 3.8 Hz*A/A₀.

36. The process according to Claim 34, wherein the attenuation frequency of the foam is less than about 5.2 Hz.

37. The process according to Claim 34, wherein the one or more oxypropylene/oxyethylene copolymers has an unsaturation of less than about 0.010 meq/g.

38. The process according to Claim 34, wherein the one or more oxypropylene/oxyethylene copolymers has an unsaturation of less than about 0.008 meq/g.

39. The process according to Claim 34, wherein at least about 50 wt.% of the polyol component is double metal cyanide (DMC) catalyst based, excluding filler carried by the polyols.

40. The process according to Claim 34, wherein at least about 65 wt.% of the polyol component is double metal cyanide (DMC) catalyst based, excluding filler carried by the polyols.

41. The process according to Claim 34, wherein the primary hydroxyl content of the polyol component is at least about 70%.

42. The process according to Claim 34, wherein the primary hydroxyl content of the polyol component is at least about 80%.

43. The process according to Claim 34, wherein the isocyanate component is a mixture of 2,4- and 2,6-toluene diisocyanates.

44. The process according to Claim 34, wherein the isocyanate component is a mixture of 2,2'-, 2,4'-, and 4,4'-methylenediphenylene diisocyanates.

45. The process according to Claim 34, wherein the polyol component further includes one or more polymer polyols or polymer-modified polyols.

46. The process according to Claim 34, wherein the polyol component further includes a dispersion of styrene/acrylonitrile (SAN) random copolymers.

47. The process according to Claim 34, wherein the catalyst is chosen from bis(2-dimethylaminoethyl)ether and triethylene diamine.

48. The process according to Claim 34, wherein the blowing agent is water.

49. The process according to Claim 34, wherein the cross-linker is diethanolamine.

50. A seat cushion produced by the process according to Claim 34.
